# EUROPEAN PATENT APPLICATION

(11) **EP 1 887 793 A2**
(43) Date of publication of application: **13.02.2008**
(21) Application number: 07106977.7
(22) Date of filing: 26.04.2007
(51) Int. Cl.: H04N 5/44

(54) **Broadcast receiving apparatus and control method**

(30) Priority: 08.08.2006 KR 20060074886
(71) Applicant: Samsung Electronics Co., Ltd., Suwon-si 442-742 Gyeonggi-do (KR)
(72) Inventor: Lee, Hoo-kwan, Seoul (KR)
(74) Representative: Walaski, Jan Filip

(57) **Abstract**

A broadcasting receiving apparatus includes a first receiving unit and a second receiving unit that receive a broadcasting signal including channel information, a storing unit, and a controller that verifies whether there exists a broadcasting signal which is receivable through the first receiving unit according to a user's instruction, stores channel information corresponding to the verified broadcasting signal in the storing unit, verifies whether there exists a broadcasting signal of a predetermined format based on the channel information stored in the storing unit, and controls the second receiving unit to receive the verified broadcasting signal of the predetermined format.

## Description

The present invention relates to an apparatus and method for receiving a broadcasting signal. More particularly, the present invention relates to receiving a broadcasting signal to realize interactive broadcasting.

In recent years, broadcasting providers have provided users with traditional one-way broadcasting services and two-way broadcasting services allowing interaction with users.
Korean digital cable broadcasting providers have the application platform, which is called 'Open Cable,' and is similar to that of American digital cable broadcasting providers. A broadcasting receiving apparatus such as a set-top box that supports an open cable application platform (OCAP) must include a means for allowing communication with a user through a cable network as well as a means for receiving broadcasting signals. Cable communication means specified by the OCAP employs an Out of Band (OOB) system using out-of-band channels or a DOCSIS Set-top box Gateway (DSG) system using a modem of a DOCSIS standard. Alternatively, the cable communication means may employ both of them for compatibility.

Conventional broadcasting receiving apparatuses have a main tuner for receiving general broadcasting signals and a Data Over Cable Service Interface Specification (DOCSIS) tuner for receiving OCAP data broadcasting signals. The main tuner detects a TV signal from a cable TV band of 54 MHz to 858 MHz in the general broadcasting signals and scans channels. The DOCSIS tuner detects a DOCSIS channel signal from a DOCSIS downstream signal band of 90 MHz to 858 MHz and scans channels.

Since two tuners repeatedly scan broadcasting signals with a similar frequency band, the conventional broadcasting receiving apparatuses are inefficient in searching of channels.
In addition, the conventional broadcasting receiving apparatuses have another problem in that initial access to a cable modem is delayed since the DOCSIS downstream signal must be found separately from the TV signal.

Accordingly, there is a need for an improved system and method for providing a broadcasting receiving apparatus which is capable of increasing efficiency of channel scanning and reducing the time to access a cable modem system.

An aspect of exemplary embodiments of the present invention is to address at least the above problems and/or disadvantages and to provide at least the advantages described below. Accordingly, an aspect of exemplary embodiments of the present invention is to provide a broadcasting receiving apparatus which is capable of increasing efficiency of channel scanning and reducing the time it takes to access a cable modem system by storing only information on channels having the same frequency band as a data broadcasting signal of a DOCSIS standard among broadcasting signals received through a main tuner and scanning data broadcasting channels based on the stored channel information when an instruction to search the data broadcasting channels is input to the broadcasting receiving apparatus, and a control method thereof.

The foregoing and/or other aspects of the present invention can be achieved by providing a broadcasting receiving apparatus comprising a first receiving unit and a second receiving unit that receive a broadcasting signal including channel information, a storing unit and a controller. The controller verifies whether there exists a broadcasting signal which is receivable through the first receiving unit according to a user's instruction, stores channel information corresponding to the verified broadcasting signal in the storing unit, verifies whether there exists a broadcasting signal of a predetermined format based on the channel information stored in the storing unit, and controls the second receiving unit to receive the verified broadcasting signal of the predetermined format.

According to exemplary embodiments of the present invention, the controller stores channel information of the broadcasting signal of the predetermined format received through the second receiving unit in the storing unit.

According to exemplary embodiments of the present invention, the controller stores the channel information of the broadcasting signal received through the second receiving unit in the storing unit, based on the channel information of the broadcasting signal received through the first receiving unit and the channel information stored in the storing unit.

According to exemplary embodiments of the present invention, the controller controls the second receiving unit to receive a broadcasting signal of a Data Over Cable Service Interface Specification (DOCSIS) standard according to the user's instruction.

According to exemplary embodiments of the present invention, the second receiving unit comprises a DOCSIS tuner to receive the broadcasting signal of the DOCSIS standard.
The foregoing and/or other aspects of the present invention can be achieved by providing a control method of a broadcasting receiving apparatus. The existence of a broadcasting signal which is receivable through a first receiving unit according to a user's instruction is verified. Channel information of the verified broadcasting signal is stored. A verification is made to confirm whether there exists a broadcasting signal of a predetermined format based on the stored channel information according to the user's instruction and receiving the verified broadcasting signal of the predetermined format through a second receiving unit.

According to exemplary embodiments of the present invention, the control method further comprises storing channel information corresponding to the broadcasting signal, received through the second receiving unit.

According to exemplary embodiments of the present invention, the control method further comprises storing the channel information corresponding to a broadcasting signal received through the first receiving unit; and based on the stored channel information, storing the channel information corresponding to the broadcasting signal received through the second receiving unit.

According to exemplary embodiments of the present invention, the control method further comprises receiving a broadcasting signal of a Data Over Cable Service Interface Specification (DOCSIS) standard through the second receiving unit.

According to exemplary embodiments of the present invention, receiving the broadcasting signal through the first receiving unit and the second receiving unit each comprises tuning a channel corresponding to a receivable broadcasting signal and demodulating the broadcasting signal comprising the tuned channel.

The above and other exemplary objects, features and advantages of certain exemplary embodiments of the present invention will be more apparent from the following description taken in conjunction with the accompanying drawings, in which:
FIG. 1 is a control block diagram of a broadcasting receiving apparatus according to an exemplary embodiment of the present invention;
FIG. 2 is a view illustrating a configuration of a set-top box according to an exemplary embodiment of the present invention; and
FIG. 3 is a control flow chart illustrating an operation of the broadcasting receiving apparatus according to the exemplary embodiment of the present invention.

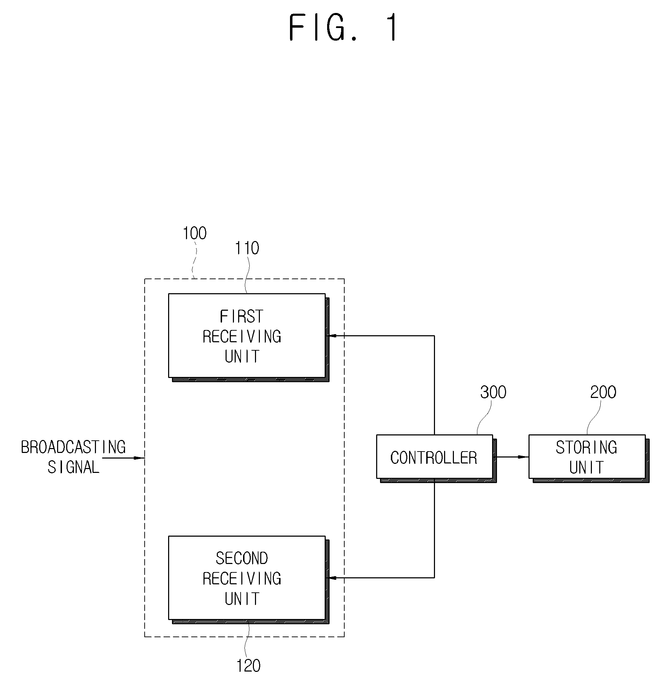

As illustrated in FIG. 1, a broadcasting, or broadcast, receiving apparatus according to an exemplary embodiment of the present invention comprises a receiving unit 100, a storing unit 200 and a controller 300.

The receiving unit 100 locks a channel comprising a particular frequency according to a control of the controller 300 and receives a broadcasting signal corresponding to the locked channel. The receiving unit 100 may be embodied to comprise tuners and demodulators. According to an exemplary implementation, the receiving unit 100 locks a channel selected by a user and receives a broadcasting signal corresponding to the locked channel.

In this exemplary embodiment of the present invention, the receiving unit 100 may comprise a first receiving unit 110 that receives general cable broadcasting signals and a second receiving unit 120 that receives signals based on the DOCSIS that processes data exchange between a cable TV broadcaster and the broadcasting receiving apparatus such as a TV set-top box.

In this exemplary embodiment, the first receiving part 110 may receive general analog broadcasting signals and digital broadcasting signals, and may be embodied by a plurality of tuners if the broadcasting receiving apparatus supports PIP (Picture In Picture).

Channel information of the broadcasting signal received through the receiving part 100 is stored in the storing part 200. According to an exemplary implementation, the channel information may include a channel frequency and a channel number, and the storing unit 200 may be embodied by a flash memory. In addition, the storing unit 200 may be provided to store channel information on analog channels, digital channels, and DOCSIS channels, separately.

Upon receiving a channel search signal from a user, the controller 300 receives a channel useful in a currently receivable frequency band through the first receiving unit 110, demodulates a received broadcasting signal into an analog signal of an NTSC (National Television System Committee) standard and a digital signal of a QAM (Quadrature Amplitude Modulation) standard, and then stores the channel information of the broadcasting signal in the storing part 200.

According to an exemplary implementation, a signal to be received through the second receiving part 120 is included in a broadcasting signal of the QAM standard received through the first receiving part 110. Accordingly, upon receiving a DOCSIS channel search instruction from the user, the controller 300 verifies whether or not a useful signal is received through the second receiving unit 120 based on the channel information stored in the storing unit 200, receives the useful signal, and stores the received signal in the storing unit 200.

The broadcasting receiving apparatus of the present invention may comprise, for example, an OCAP set-top box that receives cable broadcasting signals.

According to an American OCAP, a channel bandwidth in a cable TV (CATV) is presently 6 MHz, which is insufficient for simultaneous broadcasting of a number of programs and channel information. Accordingly, an open cable system separates the channel information, CA (Conditional Access) information, among others from broadcasting data and transmits the separated channel information, the CA information, among others, through a channel other than broadcasting channels. For example, the open cable system transmits the channel information, the CA information, etc. through a cable network to which an OOB (Out of Band) system or a DOCSIS system is applied.

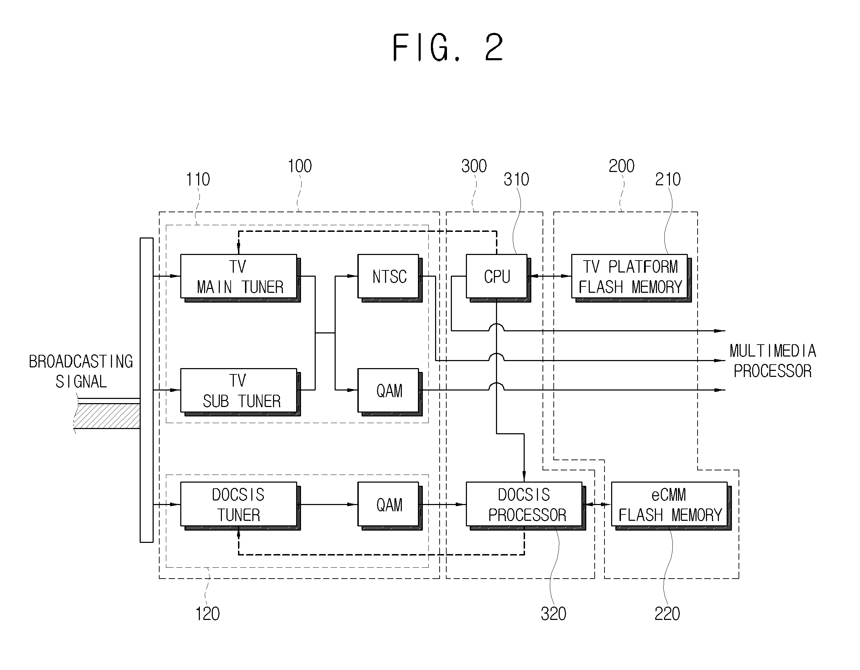

FIG. 2 illustrates an example of a terrestrial and cable complex broadcasting receiving apparatus according to an exemplary embodiment of the present invention, showing a case where the concept of the present invention is applied to an open cable set-top box incorporating a modem using DSG (DOCSIS set-top box gateway) system. A terrestrial wave received through the first receiving part 110 is processed in a terrestrial broadcasting demodulator such as an 8 VSB (Vestigial Side Band) demodulator via a terrestrial broadcasting tuner. The processed terrestrial wave is subjected to signal conversion in an A/V decoder (not shown) and a multimedia processing part, and then is transmitted as an output signal such as an image or sound to a multimedia processor for reproduction/output.

For the cable broadcasting, data transmitted via a cable are processed in a cable broadcasting demodulator such as a 64/356 QAM demodulator via a cable broadcasting tuner of the first receiving part 110 and then is input to the A/V decoder (not shown).
As illustrated in FIG. 2, a tuner for cable communication is one of the blocks of a modem. The open cable set-top box requires the cable communication tuner for modem function irrespective of how the modem is configured. The terrestrial and cable complex set-top box may incorporate at least two tuners for terrestrial broadcasting and cable broadcasting receipt and cable communication. For a set-top box to support PIP, a tuner for terrestrial broadcasting and cable broadcasting receipt may comprise a main tuner and a sub tuner.

In this exemplary embodiment of the present invention, for the OCAP set-top box, if a broadcasting channel and a DOCSIS channel for two-way broadcasting are searched through a cable broadcasting signal, when a channel search instruction is input from a user, the first receiving part 110 scans frequencies of analog broadcasting signals and digital broadcasting signals to find a useful broadcasting signal under control of a central processing unit CPU 310. In this case, the CPU 310 searches channel information of a channel corresponding to the useful broadcasting signal among the analog broadcasting signals of an NTSC standard and the digital broadcasting signals of a QAM standard through the first receiving part 110, and stores the searched channel information in the storing part 200. In this exemplary embodiment of the present invention, channel information on the analog broadcasting signals and channel information on the digital broadcasting signals having a bandwidth of 6 MHz are stored in a TV platform flash memory 210 and an embedded Cable Modem Module (eCMM) flash memory 220.
When a DOCSIS channel search instruction is input from a user, a DOCSIS processor 320 of the controller 300 controls a DOCSIS tuner to receive a useful DOCSIS broadcasting signal. According to an exemplary implementation, the DOCSIS processor 320 searches the useful DOCSIS broadcasting signal based on the channel information of the digital broadcasting signals having the bandwidth of 6 MHz among the information stored in the eCMM flash memory 220.

Here, the DOCSIS processor 320 may receive only a broadcasting signal transmitted from a cable modem termination system (CMTS) and determine whether or not the broadcasting signal is a useful DOCSIS broadcasting signal through a header of the broadcasting signal corresponding to the stored channel information.

In addition, the DOCSIS processor 320 updates the channel information corresponding to the useful DOCSIS broadcasting signal received through the DOCSIS tuner 120 and stores the updated channel information in the eCMM flash memory.

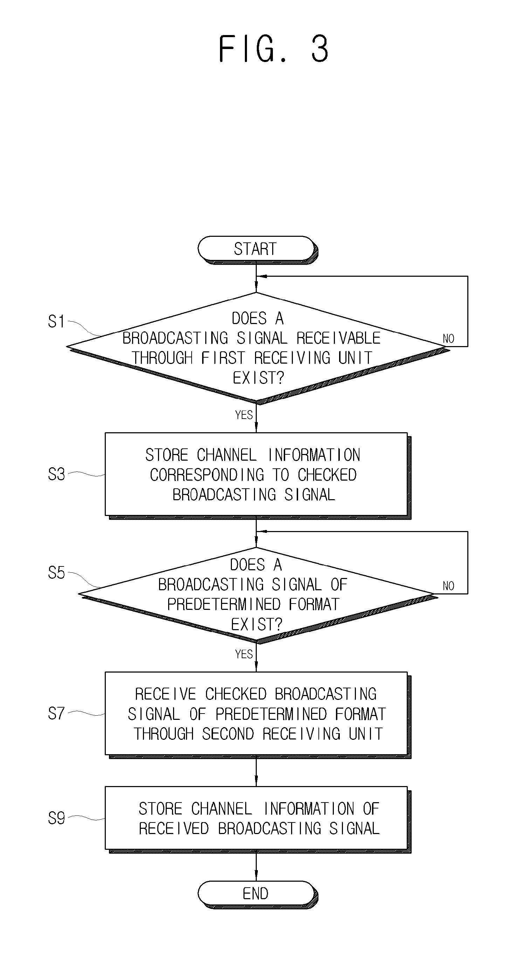

An operation of the broadcasting receiving apparatus according to the exemplary embodiment of the present invention will be described in detail with reference to FIG. 3.
First, upon receiving a channel search instruction from a user in order to receive a useful broadcasting signal, the controller 300 verifies whether there exists a broadcasting signal which can be received in the first receiving part 110 at step S1. In this exemplary embodiment of the present invention, for a set-top box to receive a broadcasting signal of an OCAP standard, the controller 300 verifies whether or not there exists a useful broadcasting signal in a band of 54 to 858 MHz.

If the existence of the useful broadcasting signal is verified, the controller 300 stores channel information corresponding to the useful broadcasting signal in the storing unit 200 at step S3. According to an exemplary implementation, the controller 300 stores channel information on analog broadcasting signals and 64/256 QAM digital broadcasting signals in the storing unit 200.

Next, upon receiving a channel search instruction from a user in order to receive a broadcasting signal of a DOCSIS standard, the controller 300 verifies whether the broadcasting signal having a bandwidth of 6 MHz among the 64/256 QAM digital broadcasting signals stored in the storing unit 200 is a useful broadcasting signal by confirming a header of the broadcasting signal at step S5. Then, the controller 300 controls the second receiving unit 120 to receive the verified useful broadcasting signal at step S7, and then stores channel information on the useful broadcasting signal in the storing unit 200 at step S9.

According to an exemplary embodiment of the present invention, the broadcasting receiving apparatus of the present invention has been illustrated with the OCAP set-top box of the cable data broadcasting standard, but may be applied to set-top boxes or digital TVs to receive ACAP (Advanced Common Application Platform) or sky wave data broadcasting signals if broadcasting signals of a particular bandwidth are received.

Although the main tuner is separated from the DOCSIS tuner in the broadcasting receiving apparatus of the present invention, one tuner may be realized to perform both functions of the main tuner and the DOCSIS tuner.

As apparent from the above description, the present invention provides a broadcasting receiving apparatus which is capable of increasing efficiency of channel scanning by storing only information on channels having the same frequency band as a data broadcasting signal of a DOCSIS standard among broadcasting signals received through a main tuner and scanning data broadcasting channels based on the stored channel information when an instruction to search the data broadcasting channels is input to the broadcasting receiving apparatus, and a control method thereof.

The present invention also provides a broadcasting receiving apparatus which is capable of reducing time taken for a data broadcasting channel tuner to access a cable modem system by separating a general tuner scanning channels having the similar bandwidth to that of the data broadcasting from a tuner for exclusive use of data broadcasting.

While the present invention has been shown and described with reference to certain exemplary embodiments thereof, it will be appreciated by those skilled in the art that various changes in form and details may be made therein without departing from the scope of the invention as defined by the appended claims.

## Claims

1. A broadcast receiving apparatus comprising:
a first receiving unit and a second receiving unit for receiving a broadcast signal including channel information;
a storing unit; and
a controller comprising:
means for storing in the storing unit channel information corresponding to a first broadcast signal received through the first receiving unit;
means for determining whether a second broadcast signal of a predetermined format exists based on the channel information stored in the storing unit, and
means for controlling the second receiving unit to receive the second broadcast signal.

2. Apparatus according to claim 1, wherein the controller is arranged to verify existence of a broadcast signal receivable through the first receiving apparatus, wherein the first broadcast signal comprises a verified broadcast signal.

3. Apparatus according to claim 1 or 2, wherein the controller stores channel information of the second broadcast signal of the predetermined format received through the second receiving unit in the storing unit.

4. Apparatus according to any one of the preceding claims, wherein the controller stores the channel information of the second broadcast signal received through the second receiving unit in the storing unit, based on the channel information of the first broadcast signal received through the first receiving unit and the channel information stored in the storing unit.

5. Apparatus according to any one of the preceding claims, wherein the controller controls the second receiving unit to receive a broadcast signal of a Data Over Cable Service Interface Specification (DOCSIS) standard.

6. Apparatus according to claim 5, wherein the second receiving unit comprises a DOCSIS tuner to receive the broadcast signal of the DOCSIS standard.

7. A control method for a broadcast receiving apparatus, comprising:
verifying whether there exists a broadcast signal which is receivable through a first receiving unit;
storing channel information of the verified broadcast signal; and
verifying whether there exists a broadcast signal of a predetermined format based on the stored channel information according to the user's instruction and receiving the verified broadcast signal of the predetermined format through a second receiving unit.

8. The control method according to claim 7, further comprising storing channel information corresponding to the broadcast signal, received through the second receiving unit.

9. The control method according to claim 7 or 8, further comprising:
storing the channel information corresponding to a broadcast signal received through the first receiving unit; and
based on the stored channel information, storing the channel information corresponding to the broadcast signal received through the second receiving unit.

10. The control method according to any one of the preceding claims, further comprising receiving a broadcast signal of a Data Over Cable Service Interface Specification (DOCSIS) standard through the second receiving unit.

11. The control method according to claim 10, wherein receiving the broadcast signal through the first receiving unit and the second receiving unit each comprise:
tuning a channel corresponding to a receivable broadcast signal; and
demodulating the broadcast signal comprising the tuned channel.
